(19) **Europäisches Patentamt**

**European Patent Office**

**Office européen des brevets**

(11) **EP 1 380 537 A1**

(12) **EUROPEAN PATENT APPLICATION**

(43) Date of publication:
**14.01.2004 Bulletin 2004/03**

(51) Int Cl.⁷: **C01B 13/10, B01F 3/04, B01F 5/02, C25B 1/13**

(21) Application number: **02254788.9**

(22) Date of filing: **09.07.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **Take-One Office Ltd.**
**Chiyoda-ku, Tokyo (JP)**

(72) Inventors:
• **Koganezawa, Akihisa**
**Ogasa-gun, Shizuoka-ken (JP)**

• **Takada, Norikazu**
**Shimizu-shi, Shizuoka-ken (JP)**
• **Saito, Kazuhiro**
**Fuji-shi, Shizuoka-ken (JP)**

(74) Representative: **West, Alan Harry et al**
**R.G.C. Jenkins & Co.**
**26 Caxton Street**
**London SW1H 0RJ (GB)**

(54) **Ozone water producing apparatus and gas-liquid mixture producing apparatus**

(57)    Apparatus for producing ozone water (60) comprises: a gas-liquid mixing vessel (31) having a water-discharge port (38) near its bottom and a gas-discharge port (39) at an upper level; an inner vessel having an upper opening (40) below the level of the gas-discharge port; a main conduit (41) extending into the gas-liquid mixing vessel and opening at a lower level inside the inner vessel and having an upper end (35) connected to a source of water via a water-supply valve (42); a gas-induction conduit (36) having one end connecting to the main conduit and its other end connected to a gas-induction valve (43); a gas-discharge conduit (52) connected between the gas-discharge port and a gas-discharge valve; a communicating conduit (53) connecting the gas-induction valve and the gas-discharge valve; an ozone generator (20) connected to the communicating conduit; and an ozone-decomposing catalyst vessel (45) connected to the communicating conduit.

FIG. 2

EP 1 380 537 A1

**EP 1 380 537 A1**

## Description

The present invention relates to an ozone water producing apparatus for generating ozone water having a predetermined concentration by dissolving appropriately generated ozone gas into water, and particularly, relates to an improved technique for obtaining ozone water having a predetermined concentration with a simple mechanism.

Ozone ($O_3$) has strong oxidation power and sterilizing power, and is used such as for deodorization and/or sterilization. As a usage pattern of ozone, there is an ozone water producing apparatus which is used such as in medical facilities. An ozone water producing apparatus generates ozone gas with an appropriate method, such as electrical discharging or electrolysis, and produces ozone water by dissolving the ozone gas into water. The ozone water produced by such apparatuses is used as cleansing water for hand-washing.

Ozone water must be accurately prepared to have a suitable concentration so that upon usage, it has an effective sterilizing power while being harmless to the human body. Particularly, in order for an ozone water producing apparatus to obtain manufacturing approval for use as a medical device, it is necessary for the apparatus to be able to control the concentration of ozone water within the precision of $4 \pm 0.5$ ppm in weight ratio. Meanwhile, it is known that hand-washing for 30 seconds with ozone water having a concentration of 4 ppm is most effective in terms of both sterilizing efficiency and safety. However, since ozone is an extremely instable substance, it has been difficult to supply ozone water of constant concentration with a good accuracy. In view of the above, an ozone water producing apparatus for medical use, which can realize accurate concentration control with a compact system, has been developed, and a patent application has been filed therefor (Japanese Patent Application No. 5-282035, which was laid open to public on May 2, 1995 as Publication No. 7-112123).

In the formerly-devised ozone water producing apparatus, a method is adopted in which a high-concentration ozone water controlled with high precision is stored, and ozone water with a desired concentration is obtained by diluting the stored high-concentration ozone water upon hand-washing. Therefore, the apparatus is suitable for usage wherein ozone water having a constant concentration is intermittently used.

However, there are many usages in which ozone water having a predetermined concentration is continuously used for a long period of time. An example thereof is industrial cleansing usage and/or the usage for cleansing foods such as vegetables. In such purposes, the above-mentioned ozone water producing apparatus for medical use may not be optimal. Further, considering that the medical-usage ozone water producing apparatus is for the usage in the medical field, not only is it necessary for the apparatus to fulfill the approval requirements as a medical device, but also, the apparatus is actually required to control the concentration of ozone water much strictly than the concentration-control range defined in the above-mentioned requirements. Therefore, a medical-usage ozone water producing apparatus is subjected to a too strict specification to be applied for industrial usages, and it may be said that widespread usage of cleaning with ozone water for industrial purposes would be too expensive.

The present invention has been contrived in view of the above and other matters, and one object of the present invention is to provide a safe and inexpensive ozone water producing apparatus which can continuously supply ozone water having an effective concentration for a long period of time.

According to one aspect of the present invention, an ozone water producing apparatus comprises: a gas-liquid mixing vessel with a closed structure having a water-discharging port near the bottom thereof and a gas-discharging port at an upper portion thereof; an inner vessel provided inside the gas-liquid mixing vessel, the inner vessel having an upper opening positioned lower than the gas-discharging port of the gas-liquid mixing vessel; a main conduit having one end extending into the gas-liquid mixing vessel and opening at a lower portion inside the inner vessel, and having an other end connected to a pressure source of material water via a water-supplying valve; a gas-induction conduit having one end connecting to a point along the main conduit, and having an other end connected to an outlet of a gas-induction valve; a gas-discharging conduit having one end connected to the gas-discharging port of the gas-liquid mixing vessel, and having an other end connected to an inlet of a gas-discharging valve; a communicating conduit connecting an inlet of the gas-induction valve and an outlet of the gas-discharging valve; an ozone generator connected to the communicating conduit; and an ozone-decomposing catalyst vessel connected to the communicating conduit.

For a more complete understanding of the present invention and the advantages thereof, reference is now made to the following description taken in conjunction with the accompanying drawings wherein:

Fig. 1 is a schematic structural diagram of an ozone water producing apparatus according to one example of the present invention;

Fig. 2 shows a schematic structural diagram of an ozone-water emitting operation of the gas-liquid mixing section in the above-mentioned example;

Fig. 3 is a schematic theoretical diagram showing a safety mechanism in the above-mentioned gas-liquid mixing section;

Fig. 4 shows a structural diagram for connecting conduits according to another example of the present invention;

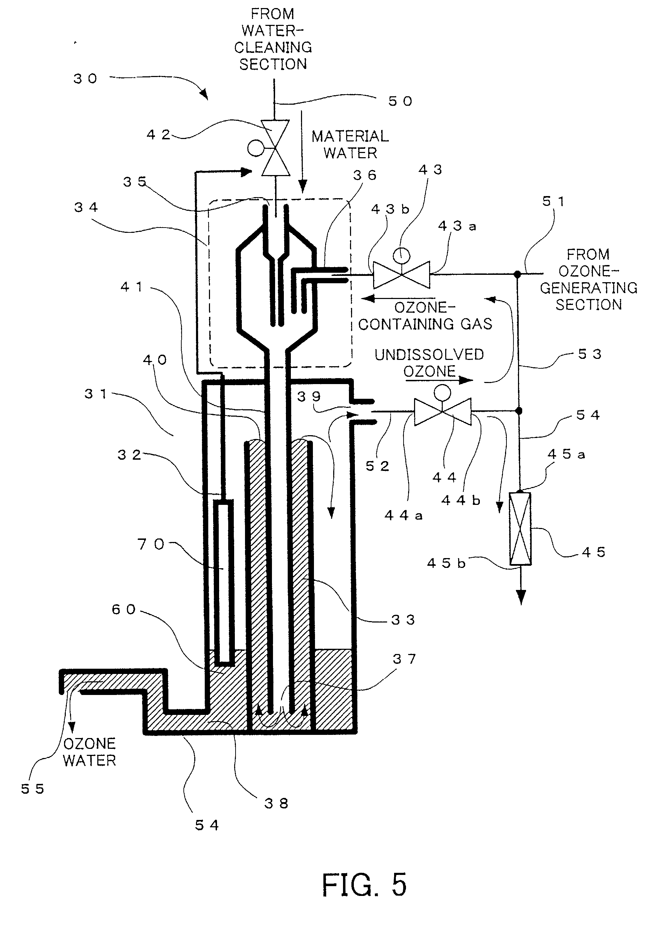

Fig. 5 is a schematic structural diagram according to another example of the present invention; and

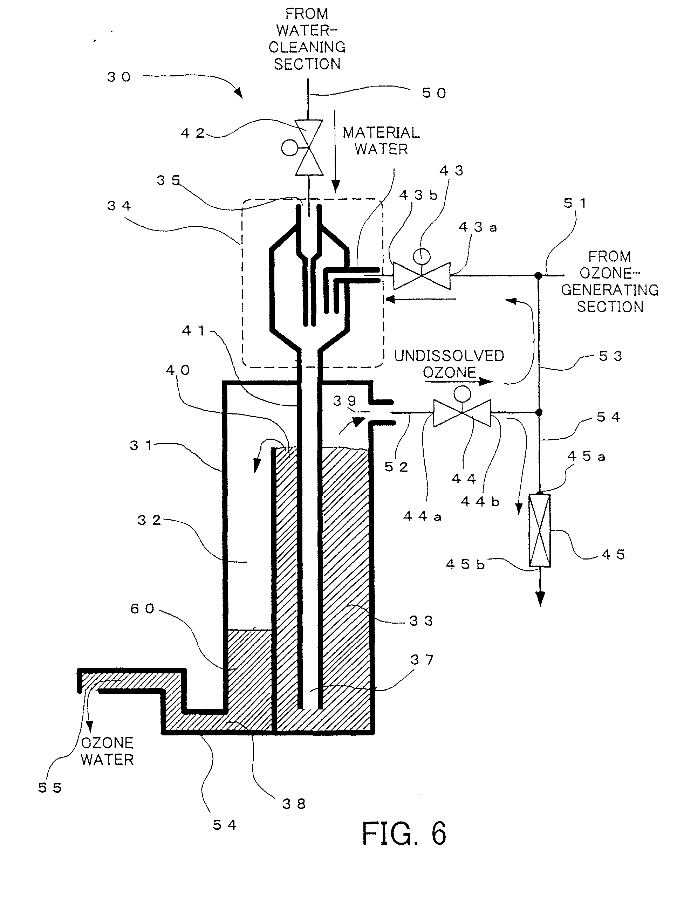

Fig. 6 is a schematic structural diagram according to another example of the present invention.

===schematic Construction===

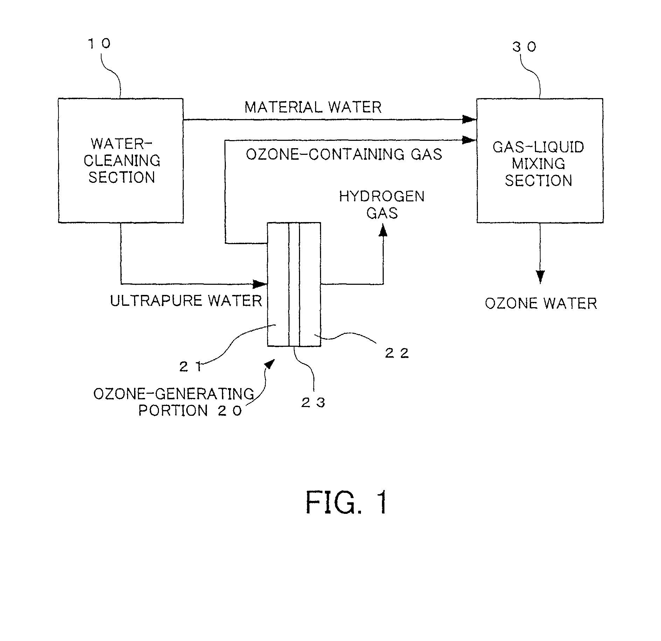

Fig. 1 shows a schematic construction diagram of an ozone water producing apparatus according to one example of the present invention. The ozone water producing apparatus generally comprises an ozone-generating section 20, a gas-liquid mixing section 30, and a water-cleaning section 10. In the present example, the ozone-generating section 20 generates ozone with an electrolysis cell using an electrolysis ozone generating method. As is well known, an electrolysis cell has a structure in which an anode 21 carries an ozone-generating catalyst such as lead dioxide, and a hydrogen-ion exchange membrane (PEM, proton exchange membrane) 23 is sandwiched between the anode 21 and a cathode 22. Pure water is introduced to the anode 21 and a current is passed between the electrodes 21, 22 to cause electrolysis of water. A portion of oxygen having been generated upon electrolysis turns into ozone by the ozone-generating catalyst, and a mixed gas (ozone-containing gas) comprising ozone and oxygen is generated from the anode 21. Hydrogen ion generated upon electrolysis reaches the cathode 22 through the PEM 23, obtains an electron, and turns into hydrogen.
The ozone-containing gas generated at the ozone-generating section 20 is introduced to the gas-liquid mixing section 30. Here, the ozone gas is dissolved into water, and ozone water is produced and discharged. The water-cleaning section 10 comprises various types of filters, and produces water adjusted to have various levels of purity, such as ultrapure water to be electrolyzed at the electrolysis cell and/or material water for dissolving ozone gas, using raw water such as tap water.

===Gas-liquid Mixing Section===

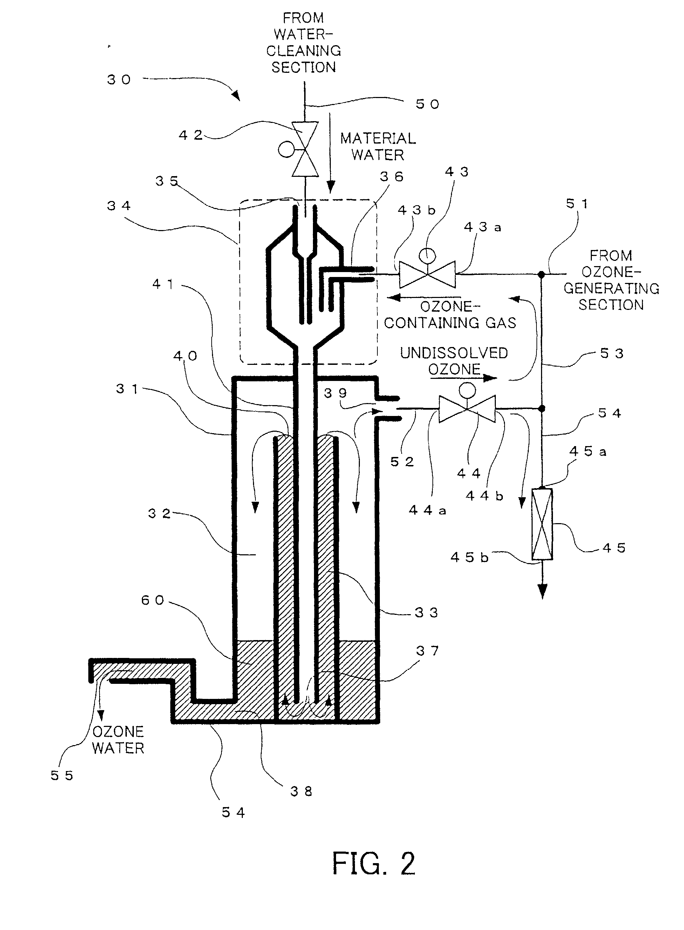

Fig. 2 shows a schematic structural diagram of the gas-liquid mixing section 30. The gas-liquid mixing section 30 mainly comprises a gas-liquid mixing vessel 31 with a closed structure. An inner vessel 33 having an opening 40 at an upper position (at the top in this example) is defined and formed inside the gas-liquid mixing vessel 31. The gas-liquid mixing section 30 further comprises: an aspirator 34 which introduces and mixes the ozone-containing oxygen gas and the material water and which emits the mixed gas and liquid into the inner vessel 33; a water-discharging conduit 54 for discharging ozone water from the gas-liquid mixing vessel 31; a gas-discharging conduit 52 for discharging outside the undissolved ozone gas within the gas-liquid mixing vessel 31; a water-supply conduit 50 for supplying material water to the aspirator 34; and valves 42 - 44 connected to the appropriate conduits. Note that the gas-liquid mixing vessel 31 of the present example takes a double-cylindrical form having a closed-cylindrical outer cylinder 32, and an inner cylinder 33 inside the outer cylinder 32 provided with an opened upper surface. The inner cylinder 33 is taken as the above-mentioned inner vessel.
The top portion of the aspirator 34 is connected to the water-supply conduit 50, which leads from the water-cleaning section 10, via an electromagnetic valve (water-supply valve) 42, to thus introduce material water to the aspirator 34. A gas-induction conduit 36 of the aspirator 34 is connected to an outlet 43b of an electromagnetic valve (gas-induction valve) 43.
On the side surface of the gas-liquid mixing vessel 31 and above the opening 40 of the inner vessel 33, there is provided a gas-discharging port 39 for discharging undissolved ozone (discharge ozone) outside the gas-liquid mixing vessel 31. The gas-discharging port 39 and an inlet 44a of an electromagnetic valve (gas-discharging valve) 44 are connected by the gas-discharging conduit 52. An outlet 44b of the gas-discharging valve 44 and an inlet 43a of the gas-induction valve 43 are connected by a communicating conduit 53. At some point of the communicating conduit 53, there are connected an inlet 45a of an ozone-decomposing catalyst vessel 45 and a conduit 51 for supplying ozone-containing gas from the ozone-generating section 20. Note that in the present example, a conduit 54, which branches off from the communicating conduit 53 on the outlet side 44b of the gas-discharging valve 44, is connected, and the inlet 45a of the ozone-decomposing catalyst vessel 45 is connected to the other end of the branched conduit 54.
Operations of the gas-liquid mixing section 30, such as the mixing process of ozone and material water and the emitting process of ozone water, will be explained below.

===Operation of Gas-liquid Mixing Section===

While compressingly supplying and introducing the material water into the aspirator 34, the valves 42, 43 are controlled so that the ozone-containing gas is sucked from the gas-induction conduit 36 to thus introduce the ozone-containing gas into the aspirator 34. Note that in the present example, a one-way valve (not shown) is built in the gas-induction conduit 36 to prevent the material water from flowing backwards to the side of the ozone-generating section 20.
The gas and liquid introduced into the aspirator 34 are introduced into the gas-liquid mixing vessel 31 through a conduit 41 which continues to an emitting port of the aspirator 34. An end 37 of the conduit 41 opens in the vicinity of the bottom surface of the inner vessel 33. The gas and liquid that have been emitted from the end 37 are mixed and dissolved while accumulating in the inner vessel 33, and ozone water 60 is produced. The ozone water 60 overflows from the opening 40 of the inner vessel 33 and into the outer cylinder 32 of the gas-liquid mixing vessel 31. A water-discharging port 38 which communicates to the outer cylinder 32 opens at the bottom side surface of the gas-liquid mixing vessel 31. The ozone water 60 having overflowed passes through the water-discharging conduit 54 continuing from the water-discharging port 38, and flows out from an ozone-water emitting port 55 located at the end of the conduit 54. The ozone water 60 that has thus flown out will be used such as for cleansing purposes.

Further, by controlling opening/closing of the gas-discharging valve 44 to operate in cooperation with the gas-induction valve 43, the discharge ozone returns back into the gas-liquid mixing vessel 31 in the order of from the gas-discharging port 39, the gas-discharging conduit 51, the communicating conduit 53 and the gas-induction conduit 36, as the aspirator 34 sucks the ozone-containing gas. Such a structure prevents the ozone-generating section 20 from dropping to negative pressure so that ozone will be stably generated. Note that in the present example, the length of the conduit leading from the ozone-generating section 20 to the inlet of the gas-induction valve 43 and the conduit length of the communicating conduit 53 are made to be as short as possible. Such a structure prevents pulsation, or periodic change, in the concentration of the ozone-containing gas being sucked into the aspirator 34, which may be caused by uneven distribution of the ozone-containing gas having a constant concentration from the ozone-generating section 20 and the dilute discharged ozone-containing gas from the gas-liquid mixing vessel 31 within the conduits.

Further, an outlet side 45b of the ozone-decomposing catalyst vessel 45, which branches off and connects to a point along the communicating conduit 53, is not closed but opened to the atmosphere. This prevents gas leakage and/or explosion caused by pressurization of the ozone-generating section 20. The redundant discharge ozone which is not returned to the gas-liquid mixing vessel 31 is decomposed into oxygen by a known ozone-decomposing catalyst filled in the ozone-decomposing catalyst vessel 45 and is released into the atmosphere.

===Adjustment of Ozone Concentration of Ozone Water===

In the formerly-devised ozone water producing apparatus, a closed vessel containing an aspirator was taken as a gas-liquid mixing vessel, ozone gas was introduced into the redundant space of the closed vessel while introducing material water into the aspirator, and the water temperature was strictly controlled. Through such a structure, the gas and liquid within the gas-liquid mixing vessel were continuously stirred and mixed while controlling their temperature, and the ozone concentration of the ozone water was maintained in a static equilibrium state. However, according to the configuration of the gas-liquid mixing section 30 of the present example, the ozone concentration of the ozone water is controlled by realizing a dynamic equilibrium state in which the ozone water is continuously discharged while maintaining its concentration at a predetermined value, and not by keeping the ozone concentration between the ozone-containing gas and the ozone water in a static equilibrium state. This dynamic equilibrium state can be realized by controlling either the ozone concentration in the ozone-containing gas introduced to the gas-liquid mixing vessel 31, the supply rate of the ozone-containing gas, or the discharge rate of the ozone water.

In the present example, the ozone concentration of the ozone water is controlled by controlling the supply rate of ozone-containing gas having a constant concentration. As is well known, an electrolysis-type ozone generator generates ozone-containing gas having substantially a constant concentration when it is in a steady operation state (i.e., except for right after starting operation), regardless of the current passed through the electrolysis cell, voltage or elapsed time. Further, it is known that, when a voltage being equal to or above a value at which ozone is generated is applied to an electrolysis cell, the generated amount (i.e., supply rate) of ozone-containing gas is proportional to the current. Accordingly, the current value passed between the electrodes 21, 22 of the electrolysis cell is adjusted so as to control the amount of ozone generated, in order for the concentration of the ozone water to be at a predetermined value when an arbitrary amount of material water is supplied to the gas-liquid mixing vessel 31. Note that, when passing a current with an upper limit of 30 A, the electrolysis cell adopted for the present example generates ozone-containing gas containing about 10 % ozone (in volume ratio) according to the current value.

Needless to say, it is possible to control the supply (discharge) rate of water using a pump. Alternatively, it may be possible to variably control the ozone concentration by providing a needle valve at some point along the gas-induction conduit, and mixing other gas introduced from the needle valve to dilute the ozone-containing gas having a constant concentration.

===Safety Mechanism===

As explained above, the apparatus of the above-mentioned example is incorporated with a safety mechanism for preventing gas leakage and/or explosion caused by pressurization when supplying ozone water. Further, in the present example, there is incorporated a safety mechanism that operates when supplying of ozone water is stopped.

In the present example, ozone is generated using an electrolysis cell. As is well known, it takes time for an electrolysis cell to start stably generating ozone-containing gas from when a current is started to be passed between the electrodes. Thus, the electrolysis cell is working even when supplying of ozone water is temporarily stopped, and ozone-containing gas will keep being generated. Accordingly, the present apparatus is structured so that the ozone-containing gas from the ozone-generating section 20 is introduced to the ozone-decomposing catalyst vessel 45 via the communicating conduit 53 and the branched conduit 54 by closing the water-supply valve 42, the gas-induction valve 43 and the gas-discharging valve 44. It is of course possible to adopt other methods for generating ozone such as the electrical discharging method in which turning on/off of power is relatively easy. However, even in such a case, since ozone is generated right until before stopping to supply ozone water, it is necessary to decompose the redundant ozone remaining such as in the communicating conduit 53. Thus, a safety mechanism for introducing ozone from the ozone-generating section 20 to the ozone-decomposing catalyst vessel 45 will be essential.

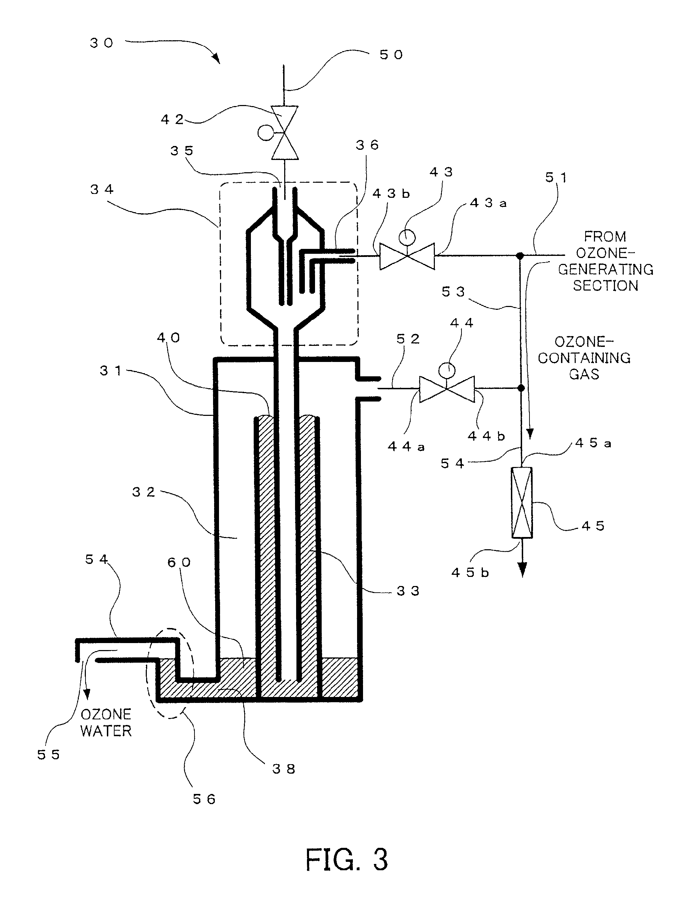

Further, by arranging the shape or configuration of the water-discharging conduit 54, undissolved ozone gas is prevented from leaking out from the water-discharging conduit 54 when stopping to supply material water, without providing any valve mechanisms. Fig. 3 schematically shows the gas-leakage preventing mechanism. In the present example, there is provided an L-shaped crank portion 56 which bends upwards at a point along the water-discharging conduit 54. The ozone water 60 remaining in the outer cylinder 32 of the gas-liquid mixing vessel 31 seals the section of the water-discharging port 38, and prevents ozone gas from leaking out from the emitting port 55 of the water-discharging conduit 54.

===Performance Evaluation===

An ozone water producing apparatus of the present example was operated, and ozone water was actually produced and discharged. The discharging amount from the ozone-water emitting port 55 was 1.8 L per minute. A test was conducted to try to control the ozone concentration within the ozone water by adjusting the current passed between the electrodes (21, 22) of the electrolysis cell. Further, the ozone concentration within the ozone water was measured with time after starting to supply the ozone-containing gas and the material water. Table 1 below shows measurement results of when 1.5 L per hour of ozone-containing gas containing 10 % volume ratio of ozone was generated by passing a current of 7.5 A. Table 2 below shows measurement results of when 3 L per hour of ozone-containing gas was generated by passing a current of 15 A.

Table 1

| sec. trial | 0 | 5 | 10 | 15 | 20 | 25 | 30 |
|---|---|---|---|---|---|---|---|
| 1st time | – | 1.08ppm | 2.17ppm | 2.11ppm | 2.11ppm | 2.16ppm | 2.15ppm |
| 2nd time | – | 0.89ppm | 1.88ppm | 2.03ppm | 1.96ppm | 1.96ppm | 1.94ppm |
| 3rd time | – | 1.01ppm | 1.91ppm | 1.98ppm | 1.98ppm | 2.08ppm | 1.91ppm |

Table 2

| sec.<br>trial | 0 | 5 | 10 | 15 | 20 | 25 | 30 |
|---|---|---|---|---|---|---|---|
| 1st time | – | 1.31ppm | 3.67ppm | 3.81ppm | 4.07ppm | 3.64ppm | 4.02ppm |
| 2nd time | – | 1.28ppm | 3.71ppm | 3.77ppm | 3.63ppm | 3.94ppm | 3.89ppm |
| 3rd time | – | 1.58ppm | 3.76ppm | 3.67ppm | 3.90ppm | 3.73ppm | 4.09ppm |

As can be seen from Tables 1 and 2, the ozone water concentration was about 2 ppm when a current of 7.5 A was passed through the electrolysis cell, and the concentration was about 4 ppm when a current of 15 A was passed likewise. That is, it is appreciated that the current value passed through the electrolysis cell and the ozone concentration within the ozone water are in a proportional relationship. Further, Tables 1 and 2 show that ozone concentration changes within a short period of time from starting introduction of ozone-containing gas and material water; it is appreciated that almost a predetermined concentration is reached within a short period of time of 10 seconds in all three trials.

Further, the ozone concentration was measured for when the ozone water was continuously emitted. Table 3 shows measurement results of concentration upon passing a current of 15 A. It can be seen that a concentration of about 4 ppm is maintained for 210 minutes.

Table 3

| time (min.) | 0 | 30 | 60 | 120 | 180 | 210 |
|---|---|---|---|---|---|---|
| conc. (ppm) | 4.13 | 4.03 | 3.88 | 4.02 | 4.04 | 4.02 |

Now, the performance of the ozone water producing apparatus of the present example will be evaluated from a viewpoint of ozone dissolving efficiency (the ratio of ozone dissolved into water in view of generated ozone gas). As explained above, the ozone water producing apparatus is able to obtain ozone water of 4 ppm for a discharge amount of 1.8 L per minute. That is, the dissolved amount of ozone into ozone water is 7.2 mg per minute. Further, considering that 3 L per hour (50 ml per minute) of ozone-containing gas is generated (supplied), and that the ozone concentration in the ozone-containing gas is about 10 % in volume ratio (i.e., 5 ml per minute), the amount of ozone is, on a weight basis:

$$(5 \text{ ml} / 22.4 \text{ L/mol}) \times (48 \text{ g/mol}) = 10.7 \text{ mg}$$

Thus, the ratio of ozone dissolved into water in view of generated ozone gas is 7.2 mg / 10.7 mg = approx. 0.7. It can be appreciated that the ozone dissolving efficiency is high, in that 70 % of the generated ozone gas dissolves into water.

===Supplemental Explanation and Other Examples===

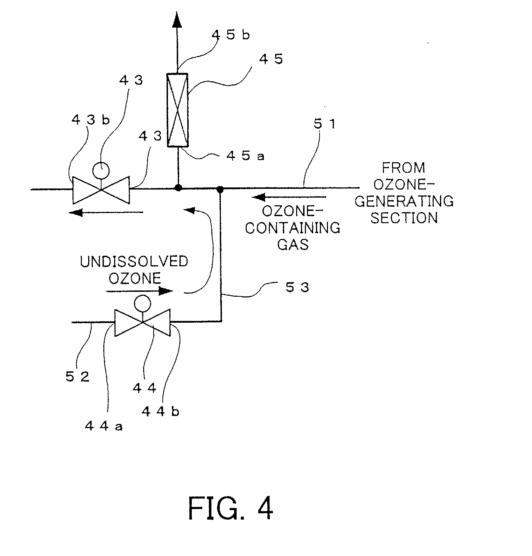

The connecting positional relationship of, for example, the outlet of the ozone-generating section and/or the ozone-decomposing catalyst vessel to the communicating conduit is not limited to the above-mentioned examples, but can be appropriately changed in view of the arrangement and structure of the piping means and/or connecting members, or the respective structural components in the whole ozone water producing apparatus. Fig. 4 shows a modified example. Note that in this figure, the inlet 45a of the ozone-decomposing catalyst vessel 45 is connected downstream from the confluence point of the discharge ozone and the ozone-containing gas from the ozone-generating section 20, when the gas-induction valve 43 and the gas-discharging valve 44 are opened and the ozone-containing gas from the ozone-generating section 20 is introduced into the aspirator 34. However, the flow of gas within the circular conduit, which starts from the gas-liquid mixing vessel 31, passes the gas-discharging port 39, the communicating conduit 53 and the gas-induction conduit 36, and returns back to the gas-liquid mixing vessel 31, is sufficiently fast because of the suction (or aspiration) of the aspirator 34. Thus, there will be no influence on, for example, the change with time of the ozone concentration upon continuous supplying of ozone water, and/or the rise of the ozone concentration upon restarting to supply the ozone water, even with the conduit-connecting configuration of the above-mentioned modified example.

In the above-mentioned example, ozone water and ozone gas are prevented from leaking by the positioning of the gas-discharging conduit and the bending shape of the water-discharging conduit. However, there may be cases in which, for some reason, the water level becomes higher than the gas-discharging conduit, or there occurs a shortage of ozone water which would otherwise remain at a level to seal the section of the water-discharging conduit. In view of such circumstances, it may be possible to set an upper and/or lower limit for the water level, and attach a water-level sensor 70 to the gas-liquid mixing vessel for detecting the pre-set water level. The valves interposed along the water-supplying conduit may be opened/closed according to signals from the water-level sensor 70.

The form of the gas-liquid mixing vessel is not limited to the above-mentioned example, but can have, for example, a configuration in which an opening is provided in the upper side surface of the inner cylinder and the ozone water overflows therefrom, or, in which the bottom surfaces of the inner cylinder and the outer cylinder are not flush with each other. Further, the gas-liquid mixing vessel and the inner/outer cylinder are not limited to a cylindrical shape, and also, the gas-liquid mixing vessel may simply be divided into two sections, and one side may be taken as the inner vessel. According to such structure, the structure of the gas-liquid mixing vessel can be simplified to further reduce the manufacturing cost of the apparatus.

According to the ozone water producing apparatus of the above-mentioned example, it is possible to stably and continuously supply ozone water having a predetermined concentration for a long period of time. However, a more strict concentration control will be made possible by, for example, controlling the water temperature within the gas-liquid mixing vessel through a known feedback control, or, maintaining the water quality of the material water in a stable state by providing a sophisticated water-cleaning mechanism in the water-cleaning section.

According to the above-mentioned embodiments of the ozone water producing apparatus of the present invention, it becomes possible to provide, for example, a high-performance and compact ozone water producing apparatus which can effectively control the ozone concentration at low costs, by devising the structure of a gas-liquid mixing vessel for mixing ozone-containing gas and material water together, and/or the method of supplying gas and liquid to the vessel, without the need for a large-scale gas-liquid mixing vessel or a temperature control mechanism. Further, since a large amount of ozone water can continuously be supplied for a long period of time with consideration to safety, the apparatus is highly versatile. Therefore, cleansing using ozone water can become widespread to various purposes such as for industrial usage.

Further, by upwardly bending the water-discharging conduit for the produced ozone water, it is possible to seal the water-discharging port when stopping to supply ozone water. Accordingly, leakage of ozone gas can be prevented without the usage of movable mechanisms such as valves. Therefore, the cost for the ozone water producing apparatus can be further reduced.

**Claims**

1. Apparatus for producing a gas-liquid mixture (60), comprising:

   a closed vessel (31) having a water-discharge port (38) near the bottom thereof and a gas-discharge port (39) at an upper portion thereof;
   an inner vessel (33) disposed at the inner bottom surface of the closed vessel (31), a top portion of the inner vessel being open (40) to the inside of the closed vessel at a level lower than that of the gas-discharge port (39);
   means (50) for supplying water into the inner vessel from a water source (10) via a water regulating valve (42);
   means (51) for supplying gas into the inner vessel via the water supply means (50) from a gas generator (20) via a gas regulating valve (44);
   means (53) for returning gas discharged from the gas-discharge port (39) to the gas supply means (51); and
   means (54) for removing gas connected to the gas return means (53).

2. Apparatus according to claim 1, further comprising means (70) for detecting the water level in the closed vessel (31) and for transmitting control signals to the water regulating valve (42).

3. Apparatus according to claim 1 for producing ozone water, comprising:

   a closed gas-liquid mixing vessel (31) having a water-discharge port (38) near the bottom thereof and a gas-discharge port (39) at an upper portion thereof;

7

an inner vessel (33) provided inside the gas-liquid mixing vessel, the inner vessel having an upper opening (40) positioned lower than the gas-discharge port (39) of the gas-liquid mixing vessel;
a main conduit (41) having one end extending into the gas-liquid mixing vessel and opening at a lower portion (37) inside the inner vessel (33) and having its other end (35) connected to a pressure source (10) of material water via a water-supply valve (42);
a gas-induction conduit (36) having one end connected to the main conduit and having its other end connected to an outlet (43b) of a gas-induction valve (43);
a gas-discharge conduit (52) having one end connected to the gas-discharge port (39) of the gas-liquid mixing vessel and having its other end connected to an inlet (44a) of a gas-discharge valve (44);
a communicating conduit (53) connecting an inlet (43a) of the gas-induction valve (43) and an outlet (44b) of the gas-discharge valve (44);
an ozone generator (20) connected to the communicating conduit (53); and
an ozone-decomposing catalyst vessel (45) connected to the communicating conduit (53).

4. Apparatus according to claim 1 or claim 3, comprising also a water-discharge conduit (54) having one end connected to the water-discharge port (38) of the gas-liquid mixing vessel, and its other end (55) open for supplying ozone water, the water-discharge conduit (54) being provided with a portion which passes upwardly above the water-discharge port whereby, when the water-supply valve (42) is closed, ozone water (60) remaining within the gas-liquid mixing vessel (31) forms a trap to seal the water-discharge port (38).

5. Apparatus according to any one of claims 1, 3 and 4, wherein the conduit (51) from the ozone-generating section (20) to the inlet (43a) of the gas-induction valve (43) and the communicating conduit (53) are short in length.

6. Apparatus according to any one of claims 1 and 3 to 5, wherein the ozone-decomposing catalyst vessel (45) is open to the atmosphere.

7. Apparatus according to any one of claims 1 and 3 to 6, comprising also
a water-level sensor (70) for detecting the water level in the gas-liquid mixing vessel (31); and
a valve arranged along the main conduit (41) operable in response to output signals from the water-level sensor.

8. Apparatus according to any one of claims 1 and 3 to 7, wherein the gas-liquid mixing vessel (31) is divided into two sections, one section forming the inner vessel (33).

9. Apparatus according to any one of claims 1 and 3 to 8, wherein the ozone generator (20) includes an electrolysis cell and wherein gas concentration of the liquid discharge from the gas-liquid mixing vessel is controlled by the electric current applied to the electrolysis cell.

10

MATERIAL WATER →

WATER-
CLEANING
SECTION

OZONE-CONTAINING GAS →

30

GAS-LIQUID
MIXING
SECTION

HYDROGEN
GAS ↑

ULTRAPURE WATER →

OZONE WATER ↓

21

22

OZONE-GENERATING
PORTION 20

23

# FIG. 1

FIG. 2

FIG. 3

EP 1 380 537 A1

FIG. 4

12

FROM
WATER-
CLEANING
SECTION

30

42

50

MATERIAL
WATER

35

36

43

34

43 b

43 a

51

FROM
OZONE-
GENERATING
SECTION

41

OZONE-
CONTAINING GAS

40

UNDISSOLVED
OZONE

53

31

39

54

32

52

44

45 a

44 a

44 b

70

45 b

45

60

33

37

OZONE
WATER

55

38

54

FIG. 5

13

FROM
WATER-
CLEANING
SECTION

MATERIAL
WATER

FROM
OZONE-
GENERATING
SECTION

UNDISSOLVED
OZONE

OZONE
WATER

FIG. 6

**European Patent Office**

# EUROPEAN SEARCH REPORT

Application Number

EP 02 25 4788

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1996, no. 07, 31 July 1996 (1996-07-31) & JP 08 059207 A (TOKICO LTD), 5 March 1996 (1996-03-05) * abstract * | 1-9 | C01B13/10 B01F3/04 B01F5/02 C25B1/13 |
| X | PATENT ABSTRACTS OF JAPAN vol. 2000, no. 08, 6 October 2000 (2000-10-06) & JP 2000 135423 A (TSUBOTA AKIO;NIPPON KANKYO EIZAI KENKYUSHO:KK), 16 May 2000 (2000-05-16) * abstract * | 1-9 | |
| X | PATENT ABSTRACTS OF JAPAN vol. 1998, no. 06, 30 April 1998 (1998-04-30) & JP 10 034174 A (FUJI ELECTRIC CO LTD), 10 February 1998 (1998-02-10) * abstract * | 1,3 | |
| X | US 2002/023866 A1 (BARNES RONALD L) 28 February 2002 (2002-02-28) * the whole document * | 1,3 | TECHNICAL FIELDS SEARCHED (Int.Cl.7) C01B B01F C02F C25B |
| A | US 6 231 769 B1 (GAMMAL BORIS ET AL) 15 May 2001 (2001-05-15) * the whole document * | 1,3 | |
| E | PATENT ABSTRACTS OF JAPAN vol. 2002, no. 11, 6 November 2002 (2002-11-06) & JP 2002 210340 A (CORE MEDICAL KK), 30 July 2002 (2002-07-30) * abstract * | 1-9 | |

The present search report has been drawn up for all claims

| Place of search | Date of completion of the search | Examiner |
|---|---|---|
| THE HAGUE | 17 December 2002 | Van der Poel, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

### ANNEX TO THE EUROPEAN SEARCH REPORT
### ON EUROPEAN PATENT APPLICATION NO.

EP 02 25 4788

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2002

| Patent document cited in search report | | Publication date | Patent family member(s) | | Publication date |
|---|---|---|---|---|---|
| JP 08059207 | A | 05-03-1996 | NONE | | |
| JP 2000135423 | A | 16-05-2000 | NONE | | |
| JP 10034174 3 | A | | NONE | | |
| US 2002023866 | A1 | 28-02-2002 | US 2001042708 | A1 | 22-11-2001 |
| US 6231769 | B1 | 15-05-2001 | FR 2764594 | A1 | 18-12-1998 |
| | | | AU 7535098 | A | 04-01-1999 |
| | | | DE 69804791 | D1 | 16-05-2002 |
| | | | EP 0989960 | A1 | 05-04-2000 |
| | | | WO 9857896 | A1 | 23-12-1998 |
| | | | JP 2002510245 | T | 02-04-2002 |
| JP 2002210340 | A | 30-07-2002 | NONE | | |